# FASCICULE DE BREVET EUROPEEN

(11) **EP 0 595 700 B1**
(45) Date de publication et mention de la délivrance du brevet: **15.01.1997**
(21) Numéro de dépôt: 93402608.9
(22) Date de dépôt: 25.10.1993
(51) Int. Cl.: G09G 1/16

(54) **Système d'acquisition et de restitution d'une séquence d'images vidéo animée en temps réel**
System zur Erfassung und Wiedergabe einer in Echtzeit animierten Folge von Videobildern
System for acquisition and reproduction of a video image sequence with real time animation

(30) Priorité: 26.10.1992 FR 9212698
(43) Date de publication de la demande: 04.05.1994
(73) Titulaire: LA FRANCAISE DES JEUX, F-92523 Neuilly-sur-Seine (FR)
(72) Inventeur: Sidawy, Christophe, F-58200 Cosne S/Loire (FR); Lenoble, Jérôme, F-50400 Granville (FR); Bigonneau, Eric, F-75020 Paris (FR); Bouedec, Jean-Etienne, F-94220 Charenton (FR)
(74) Mandataire: Doireau, Marc

(56) Documents cités:
- EP-A- 0 315 321
- EP-A- 0 439 201

## Description

La présente invention concerne un système d'acquisition et de restitution d'une séquence d'images vidéo animée en temps réel, du type comprenant au moins un étage d'acquisition de données constitué d'un bloc de mémoire et d'un dispositif écriture/lecture formé par un contrôleur d'image ou d'écran piloté par une unité centrale de traitement pour lire et écrire dans le bloc de mémoire des données numériques correspondant à au moins une séquence d'images, et un étage de restitution de données.

D'une manière générale, il est souhaitable qu'un tel système soit notamment capable d'acquérir, de stocker localement et de restituer en temps réel une grande quantité d'images de haute qualité, sachant :
- qu'une image se compose d'un ensemble de points d'image (pixels en langue anglaise), chaque point d'image étant codé sur une profondeur de 16 à 32 bits, et
- que l'on entend par temps réel, la possibilité de commuter dans la fréquence trame d'une image électronique, une image complète 25 ou 30 fois/seconde.

Pour ce faire, un tel système doit être équipé d'un grand volume de mémoire, afin de répondre aux besoins importants en termes de capacité de stockage pour ce type de données.

Dans un système d'acquisition et de restitution du type précité, le dispositif de lecture/écriture qui est formé par un contrôleur d'écran dans l'étage d'acquisition des données, prend en compte des macro-commandes délivrées par l'unité centrale de traitement pour gérer les données du bloc de mémoire, en exécutant notamment des opérations de lecture, d'écriture et de rafraîchissement. Parallèlement, l'étage de restitution doit également accéder au bloc de mémoire pour y lire des données numériques correspondant à au moins une séquence d'images, et restituer ensuite sous forme analogique cette séquence sur l'écran.

L'étage d'acquisition et l'étage de restitution doivent donc pouvoir accéder au bloc de mémoire, mais concrètement ils ne peuvent le faire simultanément. En effet, à l'heure actuelle, aucune technologie mémoire ne permet des accès simultanés, si bien que diverses solutions ont été appliquées pour gérer le problème posé par les accès au bloc de mémoire.

Une première solution consiste à équiper le système d'un dispositif d'arbitrage, de type séquenceur, qui alloue une fraction de la bande passante du bloc de mémoire (nombre total de bits qui peuvent être lus ou écrits par unité de temps) à des opérations de lecture, d'écriture et de rafraîchissement effectuées par le contrôleur d'écran de l'étage d'acquisition, et alloue à l'étage de restitution la fraction restante de la bande passante afin de lire une séquence d'images et l'afficher sur l'écran.

Une seconde solution, plus récente, consiste à utiliser un bloc de mémoire formé de mémoires dynamiques vidéo RAM, qui ont la particularité de comporter un registre à décalage qui sert d'interface entre le bloc de mémoire et l'étage de restitution. Autrement dit, toute information échangée entre le bloc de mémoire et l'étage de restitution transite par ce registre. Dans un tel système, le chargement et/ou le déchargement du registre à décalage s'effectue pendant le retour de balayage ligne de l'écran, de sorte qu'une fraction plus grande de la bande passante du bloc de mémoire soit affectée à la gestion des données de ce bloc de mémoire par le contrôleur d'écran.

Ainsi, les deux solutions précitées résolvent le problème du double accès au bloc de mémoire par alternance des accès requis pour la gestion des données du bloc de mémoire et ceux requis pour la restitution graphique des données enregistrées dans le bloc de mémoire.

Ces solutions conduisent cependant à des systèmes ayant des performances limitées en termes de puissance d'affichage sur l'écran, c'est-à-dire que la possibilité d'animation des images sur l'écran est restreinte. En effet, dans ces systèmes les temps d'accès en mode lecture ou écriture pour gérer les données enregistrées ou à enregistrer dans le bloc de mémoire sont relativement élevés, et il en résulte que les opérations d'enregistrement des données de nouvelles séquences d'images dans le bloc de mémoire se font à une fréquence inférieure à la fréquence d'affichage des points d'image sur l'écran (fréquence pixel). Concrètement, le niveau des performances de ces systèmes correspond à un débit d'environ 3 à 4.000.000 de points d'image/seconde, ce qui limite fortement les possibilités d'une restitution animée en temps réel.

En outre, la technologie des mémoires vidéo RAM reste encore très coûteuse par rapport à des mémoires dynamiques standards produites en série. Pour un exemple de l'art antérieur voir EP-A-0 439 201.

Le but de l'invention est d'apporter une solution nouvelle et originale au problème du double accès au bloc de mémoire, pour aboutir à un système plus performant en termes de puissance d'affichage, avec un coût notablement réduit par rapport aux systèmes existants.

A cet effet, l'invention propose un système d'acquisition et de restitution d'une séquence d'images animée en temps réel, du type précité et qui est caractérisé en ce que l'étage d'acquisition de données comprend au moins deux blocs de mémoire autonomes qui sont respectivement associés à au moins deux contrôleurs d'image ou d'écran, de manière à allouer en alternance un bloc de mémoire et son contrôleur associé à l'étage d'acquisition de données pour réaliser des opérations de gestion des données enregistrées ou à enregistrer dans ce bloc de mémoire, et au moins un autre bloc de mémoire et son contrôleur associé à l'étage de restitution pour reproduire des séquences d'images enregistrées dans cet autre bloc de mémoire.

Ainsi, le système de restitution peut procéder à l'affichage de séquences d'images enregistrées dans le bloc de mémoire associé à l'un des contrôleurs, alors que simultanément de nouvelles séquences d'images sont enregistrées dans le bloc de mémoire associé à l'autre contrôleur, et vice versa. Le système de restitution peut donc travailler alternativement et à grande vitesse avec les deux contrôleurs, c'est-à-dire que l'on s'est affranchi des problèmes d'alternances pour les accès à un bloc de mémoire géré par un seul contrôleur.

Selon une autre caractéristique de l'invention, chaque bloc de mémoire est réalisé en mémoires DRAM standards du type synchrone ou asynchrone.

Selon un mode de réalisation de l'invention, chaque contrôleur est interposé entre le bloc de mémoire auquel il est associé et l'unité centrale de commande.

Selon un mode préférentiel de réalisation d'un système conforme à l'invention, chaque contrôleur est également connecté à un bus de transmission permettant de recevoir directement des données résultant de la compression de séquences d'images à restituer, et qui sont enregistrées dans une mémoire auxiliaire du type FIFO ou SRAM, ou une unité de disque, par exemple.

Il ressort d'une telle configuration que chaque contrôleur constitue un point de croisement ou dispositif de commutation en lecture ou écriture vis-à-vis de quatre blocs fonctionnels distincts situés à la périphérie du contrôleur, à savoir :
- un bloc de mémoire DRAM,
- l'unité centrale de traitement,
- une unité de mémoire auxiliaire du type FIFO ou SRAM, ou une unité de disque, et
- les circuits convertisseurs ADC/DAC de l'étage de restitution.

Un système d'acquisition et de restitution selon l'invention présente de nombreux avantages tant sur le plan animation graphique, que sur le plan économique.

En effet, un tel système permet de réaliser une animation de qualité sur la quasi-totalité de l'écran, avec un débit d'environ 12.000.000 de points image/seconde, cette animation graphique pouvant se traduire par des déplacements dans les axes du plan, de morceaux d'images ou d'objets graphiques multiples devant un fond de décor fixe ou animé.

En outre, un système selon l'invention a permis de trouver une alternative à l'utilisation de mémoires vidéo de faible capacité et surtout fort coûteuses, avec des mémoires vidéo standards et sans apporter de contrainte particulière sur le plan matériel.

Selon encore un autre avantage de l'invention, il est possible d'équiper le système d'une mémoire ayant une capacité minimum de 256 MO, mémoire qui peut être notamment implantée sur une carte électronique équivalente à la surface maximum disponible sur une carte additionnelle pour micro-ordinateur par exemple, aux standards ISA,MCA, EISA ou NUBUS.

D'autres avantages, caractéristiques et détails de l'invention ressortiront de la description explicative qui va suivre, faite en référence aux dessins annexés, donnés uniquement à titre d'exemples, et dans lesquels :
- la figure 1 est une vue simplifiée, sous forme de schéma-bloc, d'un système d'acquisition et de restitution de séquences d'images selon l'Art Antérieur,
- la figure 2 est une vue simplifiée, sous forme de schéma-bloc, d'un système d'acquisition et de restitution de séquences d'images selon un mode de réalisation de l'invention, et
- la figure 3 est une vue simplifiée, sous une forme de schéma-bloc, d'une variante de réalisation de l'invention.

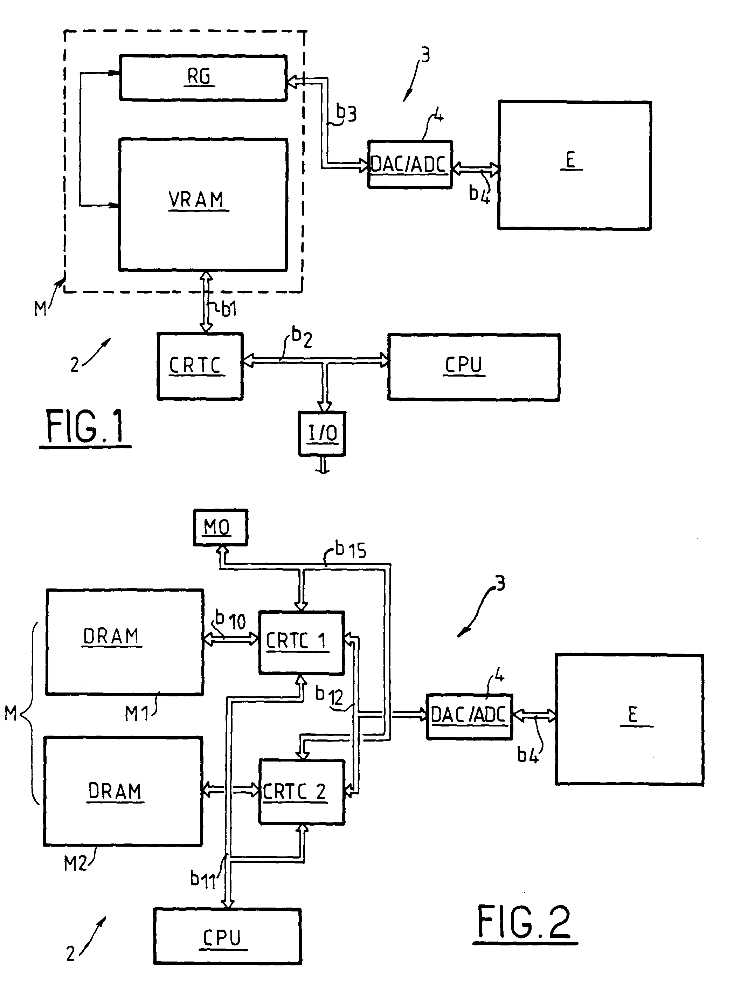

Un système d'acquisition et de restitution d'une séquence d'images animée, selon l'Art Antérieur et tel que schématiquement illustré à la figure 1, comprend un étage 2 d'acquisition de données numériques, et un étage 3 de restitution graphique de ces données.

L'étage 2 d'acquisition de données comprend un bloc de mémoire M et un dispositif de lecture/écriture formé d'un contrôleur d'écran CRTC piloté par une unité centrale de commande CPU. Le bloc de mémoire M est réalisé en mémoires VRAM associées à un registre à décalage RG. Le contrôleur d'écran CRTC communique avec le bloc de mémoire M par un bus de liaison b1 pour assurer les opérations de lecture/écriture dans les mémoires VRAM, et avec l'unité centrale de commande CPU par un bus de liaison b2, et un interface I/O connecté au bus b2 pour assurer une liaison avec des organes périphériques (non représentés).

L'étage 3 de restitution comprend un dispositif convertisseur 4 constitué d'un convertisseur numérique-analogique DAC et d'un convertisseur analogique-numérique ADC. Le dispositif convertisseur 4 est relié par un bus b3 au registre RG du bloc de mémoire M et par une bus b4 à un écran E à balayage du type télévision.

Comme cela a été explicité en préambule, un tel système alloue en alternance le bloc de mémoire M à l'étage 2 d'acquisition de données et à l'étage 3 de restitution de ces données, avec les inconvénients résultant d'une telle alternance.

Le système d'acquisition et de restitution d'une séquence d'images animée en temps réel, selon l'invention et tel qu'illustré schématiquement à la figure 2, comprend également un étage 2 d'acquisition de données sous forme numérique et un étage 3 de restitution graphique de ces données.

L'étage 2 d'acquisition de données comprend une mémoire M scindée en au moins deux blocs de mémoire M1 et M2 autonomes qui sont chacun constitués de mémoires dynamiques DRAM standards du type synchrone ou asynchrone. Chaque bloc de mémoire M1, M2 est associé à un dispositif d'écriture/lecture formé d'un contrôleur d'image ou d'écran CRTC1, CRTC2. Les deux contrôleurs sont pilotés par une unité centrale de commande CPU. Chaque bloc de mémoire M1, M2 est relié par un bus de liaison b10 au contrôleur associé CRTC1, CRTC2. L'unité centrale de commande CPU est reliée par un bus de liaison b11 aux deux contrôleurs CRTC1, CRTC2.

L'étage 3 de restitution est par exemple globalement du même type que celui décrit en référence à la figure 1, c'est-à-dire qu'il comprend un dispositif convertisseur 4 de type numérique/analogique DAC et/ou analogique/numérique ADC, et un écran E. Le dispositif convertisseur 4 est relié par un bus liaison b12 à chacun des deux contrôleurs CRTC1 et CRTC2. Le dispositif convertisseur 4 est utilisé par exemple pour au moins transformer dans un standard numérique ou analogique de télévision des données numériques prélevées dans un bloc de mémoire et correspondant à une séquence d'images.

En outre, chaque contrôleur CRTC1 et CRTC2 est relié par un bus de liaison b15 avec un organe périphérique, tel qu'une mémoire auxiliaire MO pour recevoir directement des données résultant de la compression de séquences d'images à restituer.

Ainsi, en fonctionnement, il est possible d'allouer en alternance un bloc de mémoire, par exemple le bloc M1 et le contrôleur CRTC1 associé, à l'étage 2 d'acquisition de données pour réaliser des opérations de gestion des données enregistrées ou à enregistrer dans le bloc de mémoire M1, et l'autre bloc de mémoire M2 et le contrôleur associé CRTC2 à l'étage 3 de restitution pour reproduire graphiquement sur l'écran E des séquences d'images enregistrées dans le bloc de mémoire M2.

Dans un tel mode de fonctionnement, l'étage 3 de restitution peut ainsi accéder en permanence à l'un ou l'autre bloc de mémoire M1 ou M2, sans qu'il y ait une alternance d'accès à un bloc de mémoire unique, tantôt par l'étage 2 d'acquisition et tantôt par l'étage 3 de restitution. Ainsi, lorsque des séquences d'images sont visualisées et animées sur l'écran E à partir de données numériques prélevées dans l'un des blocs de mémoire, de nouvelles séquences d'images peuvent être enregistrées dans l'autre bloc de mémoire avant d'être visualisées et animées, ce qui permet d'assurer une parfaite continuité dans l'animation de l'écran.

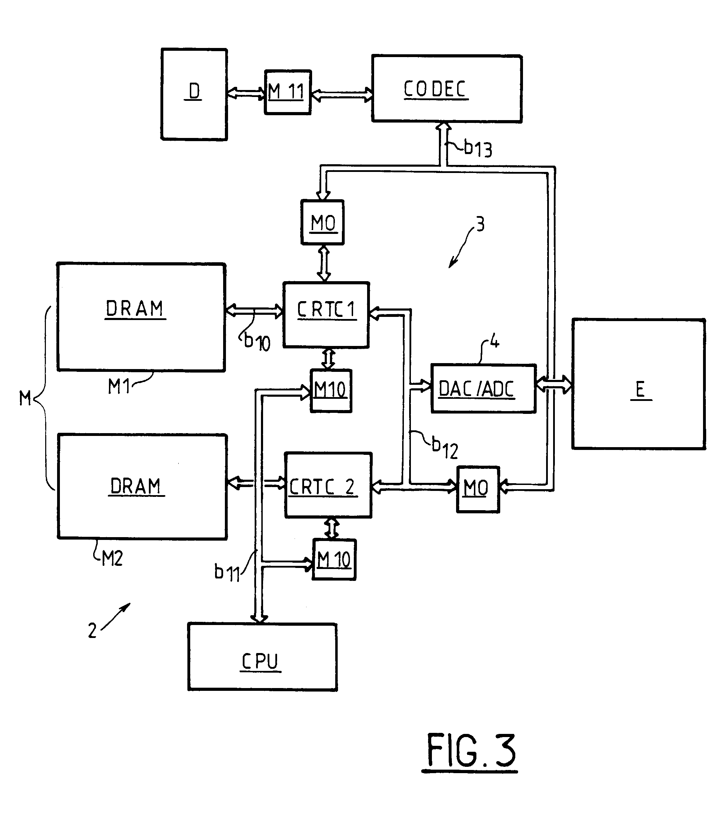

Une variante de réalisation est illustrée à la figure 3 pour montrer concrètement une extension des possibilités du système selon l'invention.

Dans cette variante, chaque contrôleur CRTC1 et CRTC2 est relié :
- à l'unité de traitement CPU par une mémoire auxiliaire ou tampon M10 de 16 ou 32 bits de large avec deux bits aller et retour de contrôle de flux, par exemple, pour augmenter les vitesses de traitement, et
- à une mémoire auxiliaire ou tampon MO, ces deux mémoires MO étant reliées par un bus b13 à un codeur/décodeur CODEC, lui-même relié à un disque dur D, par exemple, avec interposition d'une mémoire auxiliaire ou tampon M11.

Ainsi, pour des opérations de compression et/ou de décompression de séquences d'images utilisant un procédé intertrame aux standards (MPEG I, MPEG II ou CCITT H.261, par exemple), on utilise le codeur/décodeur CODEC qui doit gérer simultanément au moins trois flots de données pour traiter une image i + 1 à partir d'une image i précédemment traitée.

En mode compression de séquences d'images, le codeur/décodeur CODEC gère :
- un premier flot d'entrée de signaux vidéo numérisés stockés dans un plan mémoire du bloc de mémoire M1 par le contrôleur CRTC1, ce flot d'entrée provenant d'une source externe, telle qu'une caméra par exemple,
- un deuxième flot d'entrée de signaux numérisés de référence stockés dans le bloc de mémoire M2 par le contrôleur CRTC2, ces signaux correspondant à l'image i précédente, et
- un troisième flot de sortie de signaux numérisés compressés traités par le codeur/décodeur et qui permettront de reconstruire l'image i + 1 à partir de l'image i, ces signaux étant envoyés sur le disque dur D.

En mode décompression de séquences d'images, le codeur/décodeur CODEC gère :
- un premier flot d'entrée correspondant à un flot de signaux numérisés compressés prélevés sur le disque dur D,
- un deuxième flot d'entrée correspondant aux signaux numérisés qui ont été décompressés dans une précédente étape et qui sont prélevés dans l'un des blocs de mémoire M1 ou M2 et fournis au codeur/décodeur par le contrôleur d'écran associé au bloc de mémoire M1 ou M2, et
- un troisième flot de sortie de signaux numérisés décompressés traités et correspondant à l'image i + 1, ces signaux étant envoyés vers l'autre contrôleur d'écran pour être affichés sur l'écran.

Ces opérations de compression/décompression de signaux sont notamment facilitées par la présence des deux contrôleurs CRTC1 et CRTC2.

D'une manière générale, le fonctionnement de l'appareil peut être inversé, dans ce sens que l'on ne restitue pas des images graphiques, mais que l'on capte des images à partir de l'écran E pour les enregistrer dans les blocs de mémoire M1 et M2, et les stocker ensuite dans une mémoire auxiliaire, par exemple.

Ainsi, l'étage de restitution 3 peut acquérir les données correspondant à une séquence d'images et les emmagasiner alternativement dans un bloc de mémoire M1 ou M2 par l'intermédiaire de son contrôleur associé CRTC1 ou CRTC2, et l'étage d'acquisition 2 peut lire alternativement ces données dans l'autre bloc de mémoire M2 ou M1 par l'intermédiaire du contrôleur associé CRTC2 ou CRTC1 et les stocker dans une mémoire auxiliaire ou une unité de disque.

Les possibilités d'animation en temps réel d'images sur un écran de télévision peuvent être notamment utilisées pour des jeux interactifs du type grand public, par exemple.

## Revendications

1. Système d'acquisition et de restitution d'une séquence d'images animée en temps réel, du type comprenant au moins un étage d'acquisition de données constitué d'un bloc de mémoire et d'un dispositif écriture/lecture formé par un contrôleur d'image ou d'écran piloté par une unité centrale de traitement pour lire/écrire dans le bloc de mémoire des données numériques correspondant à au moins une séquence d'images, et un étage de restitution de données, caractérisé en ce que l'étage (2) d'acquisition de données comprend au moins deux blocs de mémoire autonomes (M1, M2) qui sont respectivement associés à au moins deux contrôleurs d'image ou d'écran (CRTC1, CRTC2), de manière à allouer en alternance un bloc de mémoire (M1 ou M2) et son contrôleur associé (CRTC1 ou CRTC2), à l'étage (2) d'acquisition de données pour réaliser des opérations de gestion des données enregistrées ou à enregistrer dans le bloc de mémoire, et au moins un autre bloc de mémoire (M2 ou M1) et son contrôleur associé (CRTC2 ou CRTC1) à l'étage (3) de restitution pour reproduire des séquences d'images enregistrées dans cet autre bloc de mémoire.

2. Système selon la revendication 1, caractérisé en ce que l'étage (3) de restitution comprend au moins un dispositif convertisseur (4) pour au moins transformer dans un standard numérique ou analogique de télévision des données numériques prélevées dans un bloc de mémoire et correspondant à une séquence d'images.

3. Système selon le revendication 1 ou 2, caractérisé en ce que chaque bloc de mémoire (M1, M2) est réalisé en mémoires DRAM standards du type synchrone ou asynchrone.

4. Système selon l'une des revendications 1 à 3, caractérisé en ce que chaque contrôleur (CRTC1, CRTC2) est interposé entre le bloc de mémoire (M1, M2) auquel il est associé et l'unité centrale de commande (CPU), et est relié au dispositif convertisseur (4).

5. Système selon l'une quelconque des revendications 1 à 4, caractérisé en ce que les contrôleurs (CRTC1, CRTC2) sont directement reliés à un organe périphérique (MO), tel qu'une mémoire auxiliaire ou une unité de disque, pour recevoir directement des données résultant de la compression ou de tout autre traitement d'images à restituer sur l'écran graphique (E).

6. Système selon l'une quelconque des revendications 1 à 5, caractérisé en ce que l'étage (3) de restitution acquiert les données correspondant à une séquence d'images et les emmagasine alternativement dans un bloc de mémoire (M1 ou M2) par l'intermédiaire de son contrôleur associé (CRTC1 ou CRTC2), et l'étage (2) d'acquisition lit alternativement ces données dans l'autre bloc de mémoire (M2 ou M1) par l'intermédiaire du contrôleur associé (CRTC2 ou CRTC1) et les stocke dans une mémoire auxiliaire (M10) ou une unité de disque.

## Patentansprüche

1. System zur Erfassung und zur Wiedergabe einer Bewegtbildfolge in Echtzeit, der Art, daß es wenigstens eine Datenerfassungsstufe, die von einem Speicherblock und einer durch eine Bild- oder Schirmsteuereinrichtung gebildeten Schreib-/Leseeinrichtung, welche von einer Zentralverarbeitungseinheit für das Lesen/Schreiben von wenigstens einer Bildfolge entsprechenden digitalen Daten in dem Speicherblock gesteuert wird, gebildet ist, und eine Datenwiedergabestufe umfaßt, dadurch **gekennzeichnet**, daß die Datenerfassungsstufe (2) wenigstens zwei autonome Speicherblöcke (M1, M2) umfaßt, welche jeweils mit wenigstens zwei Bild- oder Schirmsteuereinrichtungen (CRTC1, CRTC2) derart verbunden sind, daß im Wechsel ein Speicherblock (M1 oder M2) und seine zugehörige Steuereinrichtung (CRTC1 oder CRTC2) der Datenerfassungsstufe (2) zum Realisieren von Lenkungsoperationen an den Daten, die in dem Speicherblock gespeichert oder zu speichern sind, und wenigstens ein anderer Speicherblock (M2 oder M1) und seine zugehörige Steuereinrichtung (CRTC2 oder CRTC1) der Wiedergabestufe (3) zum Reproduzieren von in diesem anderen Speicherblock gespeicherten Bildfolgen zugeordnet wird.

2. System gemäß Anspruch 1, dadurch **gekennzeichnet**, daß die Wiedergabestufe (3) wenigstens eine Umsetzungseinrichtung (4) wenigstens zum Umwandeln von aus einem Speicherblock genommenen und einer Bildfolge entsprechenden Digitaldaten in ein digitales oder analoges Fernsehstandard umfaßt.

3. System gemäß Anspruch 1 oder 2, dadurch **gekennzeichnet,** daß jeder Speicherblock (M1, M2) aus Standard-Dynamik-Direktzugriffsspeichern (DRAM) des synchronen oder des asynchronen Typs gebildet ist.

4. System gemäß einem der Ansprüche 1 bis 3, dadurch **gekennzeichnet,** daß jede Steuereinrichtung (CRTC1, CRTC2) zwischen den Speicherblock (M1, M2), welchem sie zugeordnet ist, und die zentrale Steuereinheit (CPU) zwischengefügt und mit der Umsetzungseinrichtung (4) verbunden ist.

5. System gemäß irgendeinem der Ansprüche 1 bis 4, dadurch **gekennzeichnet**, daß die Steuereinrichtungen (CRTC1, CRTC2) direkt mit einem peripheren Organ (MO), wie einem Hilfsspeicher oder einer Platteneinheit, verbunden sind, um direkt Daten, die aus der Kompression oder irgendeiner anderen Verarbeitung von Bildern resultieren, welche auf dem Graphikschirm (E) wiedergegeben werden sollen, zu empfangen.

6. System gemäß irgendeinem der Ansprüche 1 bis 5, dadurch **gekennzeichnet**, daß die Wiedergabestufe (3) Daten erfaßt, die einer Bildfolge entsprechen, und dieselben abwechselnd in einem Speicherblock (M1 oder M2) über dessen zugehörige Steuereinrichtung (CRTC1 oder CRTC2) speichert, und die Erfassungsstufe (2) abwechselnd diese Daten aus dem anderen Speicherblock (M2 oder M1) über die zugehörige Steuereinrichtung (CRTC2 oder CRTC1) liest und sie in einem Hilfsspeicher (M10) oder einer Platteneinheit speichert.

## Claims

1. A system for acquiring and playing back an animated image sequence in real time, the system being of the type comprising at least one data acquisition stage constituted by a memory block and a read/write stage formed by a screen or image controller driven by a central processor unit for reading and writing digital data in the memory block corresponding to at least one image sequence, and a data playback stage, the system being characterized in that the data acquisition stage (2) comprises at least two self-contained memory blocks (M1, M2) respectively associated with at least two screen or image controllers (CRTC1, CRTC2), in such a manner as to allocate one of the memory blocks (M1 or M2) and its associated controller (CRTC1 or CRTC2) to the data acquisition stage (2) to perform management operations on data recorded in or to be recorded in the memory block in alternation with at least one other memory block (M2 or M1) and its associated controller (CRTC2 or CRTC1) being allocated to the playback stage (3) for reproducing image sequences recorded in said other memory block.

2. A system according to claim 1, characterized in that the playback stage (3) comprises at least one converter device (4) at least for converting digital data taken from a memory block and corresponding to an image sequence into an analog or digital television standard.

3. A system according to claim 1 or 2, characterized in that each memory block (M1, M2) is constituted by standard dynamic random access memories (DRAM) of the synchronous or the asynchronous type.

4. A system according to any one of claims 1 to 3, characterized in that each controller (CRTC1, CRTC2) is interposed between the memory block (M1, M2) with which it is associated and the central control unit (CPU), and is connected to the converter device (4).

5. A system according to any one of claims 1 to 4, characterized in that the controllers (CRTC1, CRTC2) are directly connected to a peripheral (MO) such as an auxiliary memory or a hard disk unit, for the purpose of directly receiving data that results from compressing or performing any other processing on the images to be played back on the graphics screen (E).

6. A system according to any one of claims 1 to 5, characterized in that the playback stage (3) acquires data corresponding to an image sequence and stores said data alternately in a memory block (M1 or M2) via its associated controller (CRTC1 or CRTC2), while the acquisition stage (2) reads said data alternately from the other memory block (M2 or M1) via the associated controller (CRTC2 or CRTC1) and stores said data in an auxiliary memory (M10) or in a hard disk unit.
